(19) Europäisches Patentamt

European Patent Office

Office européen des brevets

(11) **EP 1 057 658 A1**

(12) **EUROPEAN PATENT APPLICATION**

(43) Date of publication:
06.12.2000 Bulletin 2000/49

(51) Int. Cl.[7]: **B60C 3/04**

(21) Application number: **00201757.2**

(22) Date of filing: **18.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **27.05.1999 EP 99201677**

(71) Applicant:
**PIRELLI PNEUMATICI Società per Azioni
20126 Milano (IT)**

(72) Inventors:
• **Canevini, Laura
20143 Milano (IT)**

• **Lorenzetti, Daniele
20058 Villasanta (Milano) (IT)**
• **Gelosa, Elda
20035 Lissone (Milano) (IT)**
• **Mancosu, Federico
20135 Milano (IT)**

(74) Representative:
**Marchi, Massimo, Dr. et al
Marchi & Partners,
Via Pirelli, 19
20124 Milano (IT)**

(54) **Tyre having minimized rolling resistance and mould for producing said tyre**

(57)     A tyre (1) comprises a casing ply (2) having a meridian profile (14) with a central crown portion (15) and two sidewall portions (16); in the inflated configuration of the tyre (1), the crown profile portion (15) has a radius of meridian curvature $\rho_c$ in the range from 406 mm to 690 mm and each sidewall profile portion (16) forms an angle $\alpha_s$ with the axis of rotation of the tyre in the range from 25° to 30°; additionally, a mould (40) for a tyre has cheek profiles (47, 48) which have a first and a second radius of curvature $R_{fs}$, $R_{fi}$ whose ratio $R_{fs}/R_{fi}$ ranges from 0.45 to 0.56 and a base profile of one sector (46) having a radius of meridian curvature $R \geq 500$ mm and a shoulder angle $\alpha_0 \geq 42°$.

Fig.1

EP 1 057 658 A1

Printed by Xerox (UK) Business Services
2.16.7 (HRS)/3.6

**Description**

The present invention relates to a tyre having minimized rolling resistance and to a mould for producing said tyre.

Generally, a tyre for a motor vehicle is made from a predetermined viscoelastic material and comprises at least one casing ply, right- and left-hand beads, a tread strip placed on the crown of said casing ply, and at least one belt strip interposed coaxially between said casing ply and said tread strip. The casing ply has a profile (plyline), in the plane of a meridian section, which has a central crown (or under-belt) portion and two sidewall portions, one on the right and one on the left.

The major source of energy dissipated by a tyre when it rolls on a road surface consists of hysteresis losses due to the viscoelastic materials from which it is made. In particular, the energy dissipated by the various parts of a tyre depends on the cyclical stresses and deformations to which it is subjected by the continual alternation of the inflated configuration (distant from the area of contact with the road or footprint) and of the flattened configuration (centre of the footprint area).

It is estimated that the hysteresis losses account for 90-95% of the total energy dispersed by a tyre and that the remaining 5-10% is attributable to other dissipation mechanisms, such as the slip between the tyre and the road, the aerodynamic losses due to the friction of the air, and the internal friction between the air and the tyre.

Most of the energy is dissipated by the tread strip of the tyre (≥50%). This energy dissipation is essentially due to the fact that the assembly consisting of the tread strip and the belt package (belt strips) of the tyre undergoes a change of curvature in both the longitudinal direction (inflection due to the passage through the footprint) and the meridian direction (flattening of the tread strip).

This energy dissipation produces the rolling resistance of the tyre, and therefore the term "rolling resistance" (R.R.) will be used in the course of the present description and in the claims to denote the power dissipated in one cycle as a result of the cyclical deformations of the viscoelastic materials of the tyre in neutral, in other words when it is not subject to a torque.

The object of the present invention is to reduce the power dissipation of a tyre when it rolls on a road surface, and consequently to reduce its rolling resistance.

The inventors have found that the power dissipated by a tyre can be reduced by minimizing the deformations undergone by the assembly consisting of the tread strip and belt package of the tyre, in such a way as to contain the quantity of power dissipated in these. They have also found that a reduction in dissipation can be obtained by shifting the power dissipation of the tread strip to the area of the sidewalls, in such a way as to reduce the ratio between the quantity of power dissipated in the tread and the quantity of power dissipated in the sidewall.

The inventors have also identified a mould which enables a tyre to be produced with the desired characteristics.

A first aspect of the invention is a tyre for a motor vehicle, made from a predetermined viscoelastic material, and comprising

a) at least one casing ply,
b) a tread strip placed on the crown of said casing ply,
c) at least one belt strip interposed coaxially between said casing ply and said tread strip,
d) right-hand and left-hand sidewalls, and
e) right-hand and left-hand beads,
f) said casing ply having a profile (plyline), in the plane of a meridian section, which has a central crown (under-belt) portion and two sidewall portions, one on the right and one on the left,
g) each of said sidewall profile portions being delimited by two points S and K, where the point S is located substantially at one edge of said at least one belt strip and the point K separates a sidewall from a bead,
h) said tyre assuming, at the operating pressure and in the absence of a load, an inflated configuration having a predetermined outer profile which matches a predetermined enclosing rectangle,
i) said outer profile having a predetermined maximum chord $\overline{C}$ and a predetermined maximum height $\overline{H}$, the ratio $\overline{H}/\overline{C}$ lying in a range from 0.6 to 0.8, characterized in that,
j) in said inflated configuration, said crown profile portion has a radius of meridian curvature $\rho_c$ lying in a range from 406 mm to 690 mm and each of said sidewall profile portions forms an angle $\alpha_s$ with the axis of rotation of the tyre, at said point S, which lies in a range from 25° to 30°.

Preferably, each of said sidewall profile portions forms an angle $\alpha_k$ with the axis of rotation of the tyre, at said point K, which is ≥ 45°.

Advantageously, said crown profile portion is substantially flat.

In the inflated configuration, the tyre according to the invention has, for given overall dimensions, extremely flat belts in the meridian plane, so that in the flattened state, when the belts pass through the footprint, their deformation in this plane is virtually zero.

Moreover, the median casing profile has a more erect (vertical) inflated configuration in the lower area of the sidewall than a conventional tyre, and consequently the deformations in the upper parts of the sidewalls are greater than those in a conventional tyre.

In the tyre according to the invention, therefore, the power dissipation has an optimized distribution among the various parts because it is more balanced than that of a conventional tyre. This makes it possible to reduce the total power dissipation and minimize the rolling resistance of the tyre.

The shape of the tyre in the inflated state having the structural characteristics indicated above is obtained by means of a special geometry of a mould used for forming it.

A second aspect of the invention is a mould for producing a tyre made from a predetermined viscoelastic material, said mould having

A) a crown formed by radially movable sectors for moulding a tread strip and shoulders of said tyre, and
B) cheeks for moulding sidewalls and beads of said tyre,
C) said mould having a profile, in the plane of the meridian section, which has a predetermined maximum chord C, a predetermined maximum height H and a fitting line I, and is formed centrally by a base profile of one sector and laterally by profiles of said cheeks,
D) said base profile of the sector having a central portion flanked by two connecting portions, which in turn are flanked by two lateral portions,
E) each cheek profile having a total height $H_g$ and having a first portion with a first radius of curvature $R_{fs}$ and a second portion with a second radius of curvature $R_{fi}$, characterized in that
F) the ratio between said first and second radius of curvature $R_{fs}/R_{fi}$ ranges from 0.45 to 0.56.

Preferably, the ratio between said first and second radius of curvature $R_{fs}/R_{fi}$ is approximately 0.5.

Advantageously, the centres of said first and second radius of curvature $R_{fs}$ and $R_{fi}$ lie on said maximum chord C and said maximum chord C is located at a distance $H_{lc}$ from said fitting line I equal to approximately 2/3 of said height of the cheek profile $H_g$.

In one embodiment, said central portion of said base profile of the sector is substantially flat and has a radius of meridian curvature $R \geq 500$ mm, and each of said connecting portions has, at the point of junction with one of said lateral portions, an angle $\alpha_0$ with respect to the longitudinal axis of the mould which is $\geq 42°$.

Preferably, said base profile of the sector, comprising said central portion and said flanking connecting portions, has a camber f of $\leq 7.5$ mm.

A third aspect of the invention is a mould for producing a tyre from a predetermined viscoelastic material, said mould having

i. a crown formed by radially movable sectors for moulding a tread strip and shoulders of said tyre, and
ii. cheeks for moulding sidewalls and beads of said tyre,
iii. said mould having a profile, in the plane of the meridian section, which has a predetermined maximum chord C, a predetermined maximum height H and a fitting line I, and is formed centrally by a base profile of one sector and laterally by profiles of said cheeks,
iv. said base profile of the sector having a central portion flanked by two connecting portions, which in turn are flanked by two lateral portions, characterized in that
v. said central portion of said base profile of the sector is substantially flat and has a radius of meridian curvature $R \geq 500$ mm, and
vi. each of said connecting portions has, at the point of junction with one of said lateral portions, an angle $\alpha_0$ with respect to the longitudinal axis of the mould which is $\geq 42°$.

Preferably, said base profile of the sector, comprising said central portion and said flanking connecting portions, has a camber which has the value indicated above.

The mould according to the invention can be used to produce a tyre with the desired inflated configuration, as a result of the fact that the base profile of each sector, in other words the envelope line at the base of its projections and grooves, has at its sides an angle of inclination with respect to the axis of rotation of the tyre which is very small, or in any case is smaller than that of a conventional mould. The base profile of the sectors is therefore flatter and has a more open outlet than a conventional mould. In turn, the cheeks of the mould have radii of curvature $R_{fi}$ and $R_{fs}$ which have a characteristic ratio $R_{fs}/R_{fi}$ in the range from 0.45 to 0.56, and preferably $\simeq 0.5$, and their centre line is located at a height $H_{lc}$ equal to approximately 2/3 of the height of the cheek $H_g$. Additionally, the cheeks have a maximum chord C which is wider, and a width at the rim E which is greater than in a conventional mould, to prevent the beads of the tyre from being moulded in a configuration which is too "inset", in other words too inclined with respect to the axis of rotation of the tyre, and therefore from having a low rigidity in the inflated state.

Characteristics and advantages of the invention will now be illustrated in greater detail with reference to an embodiment shown by way of example, without restriction, in the attached drawings, in which

Fig. 1 is a partial sectional view, in a meridian plane, of an inflated tyre, made according to the invention;
Fig. 2 shows the tyre of Fig. 1 in the inflated and flattened configurations;
Fig. 3 is a partial sectional view, in a meridian plane, of a conventional inflated tyre;
Fig. 4 shows the Lyre of Fig. 3 in the inflated and flattened configurations;
Fig. 5 shows for the purpose of comparison the flattened configurations of the tyre according to the invention shown in Figs. 1 and 2 and of the conventional tyre shown in Figs. 3 and 4;
Fig. 6 is a graph showing how the flattening of the tyre of Figs. 1 and 2 and that of Figs. 3 and 4 varies as the load on the tyre varies;
Fig. 7 is a partial sectional view, in a meridian plane, of a mould for forming the tyre of Fig. 1.

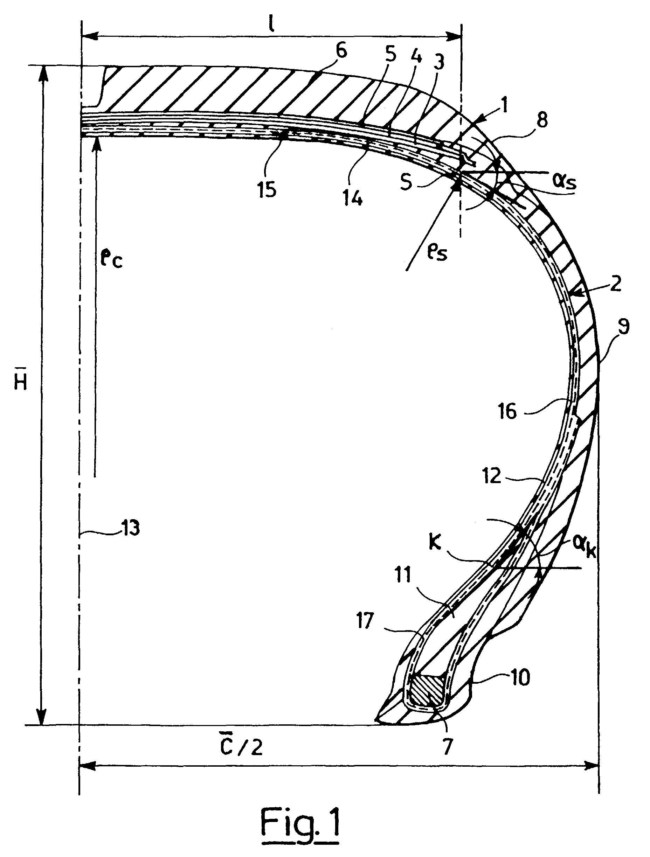

Fig. 1 shows a tyre 1 according to the invention in the inflated configuration, in the absence of a load. The tyre 1 is classed as 195/65 R 15 and is of the radial type. The tyre 1 comprises a casing 2, belt strips 3, 4 and 5, a tread strip 6 and bead cores 7. Fig. 1 shows a shoulder 8, a sidewall 9, a bead 10 and a bead filler 11, which are located to the right of an equatorial plane 13. Those located to the left of the equatorial plane 13 are not shown, because the tyre 1 is symmetrical about this plane. The tyre 1 has an air-tight inner layer (liner) 12. The casing 2 is formed from a rubberized fabric ply, reinforced with textile cords lying in meridian (radial) planes and wrapped around bead cores 7.

The belt strips 3, 4 and 5 and the tread strip 6 are placed on the crown of the casing 2 and extend circumferentially around it. The belt strips 3 and 4 are formed from rubberized fabric plies, reinforced with corresponding metal cords, crossing each other symmetrically with respect to the equatorial plane 13. The belt strip 5, placed on top of the belt strips 3 and 4, is formed from a rubberized fabric ply, reinforced with textile cords, orientated circumferentially (0° belt). The tread strip 6 is provided with projections, blocks and grooves (not shown) which, during operation, come into contact with a road surface.

The outer profile of the tyre 1 has a maximum chord $\overline{C}$ of 200.8 mm and a maximum height $\overline{H}$ of 128.1 mm. The ratio $\overline{H} / \overline{C}$ is 0.63 and lies in a range from 0.6 to 0.8.

The casing ply 2 of the tyre 1 has a meridian profile (plyline) 14, represented by a broken line, comprising a central crown portion (under-belt) 15 and two sidewall portions 16, one on the right and one on the left. Fig. 1 shows only half of the crown portion 15 and the sidewall portion 16 which are located to the right of the equatorial plane 13. Those located to the left are mirror images. Each sidewall portion 16 is delimited by two terminal points, S and K. The point S is located at one edge of the belt package 3, 4 and 5, and forms the point of separation between the crown portion 15 and the sidewall portion 16. The point K forms the point of separation between the sidewall portion 16 and a bead portion 17. The crown portion 15 of the meridian profile 14 has a radius of curvature $\rho_c$. The sidewall profile 16 forms an angle $\alpha_s$ with the axis of rotation of the tyre at the point S, and forms an angle $\alpha_k$ with the axis of rotation of the tyre at the point K. The tread 6 has a width l.

In the tyre 1, the angle $\alpha_s$ advantageously ranges from 25° to 30° as the radius of curvature $\rho_c$ varies in a range from 406 mm to 690 mm.

The angle $\alpha_k$ lies in a range from 45° to 50°.

In particular, in the tyre 1 the radius of curvature $\rho_c$ = 689.8 mm; the angle $\alpha_s$ = 29.6°; the angle $\alpha_k$ = 45.8°; and the width l = 74.6 mm.

In the tyre 1, the variations of curvature between the inflated and flattened states of the belt package 3, 4 and 5 and the tread strip 6 are minimized by making these have an extremely flat shape in the inflated configuration.

This is demonstrated by the formula discovered by the inventors, which relates the variation of equatorial curvature ΔC due to the passage through the footprint to the characteristic parameters of the tyre:

$$\Delta C = K_r * s/ (T/p) = K_r * s/(l - 2 * \rho_s * \alpha_s) = K_r * s/(l * (1 - \rho_s/\rho_c))$$

where $\rho_c$, $\alpha_s$ and $\alpha_k$ represent the parameters indicated above;
$\rho_s$ = radius of meridian curvature in the area of the point S;
$K_r$ = radial rigidity of the sidewall;
s = flattening;
T = total pull on the belt package in the circumferential direction;
p = air pressure inside the tyre.

From the above relation it may be seen that ΔC decreases with a decrease in $\alpha_s$ and with a decrease in the

ratio $\rho_s/\rho_c$, in other words with an increase in $\rho_c$.

In the tyre 1, the radius of curvature $\rho_c$ has a much higher value than in a conventional tyre, as will be illustrated in greater detail below. The meridian profile 14 of the tyre 1 therefore has a smaller ratio $\rho_s/\rho_c$. Additionally, the lower area of the sidewall 16 has a more upright shape than that of a conventional tyre. When the tyre is flattened, this shape of the sidewall tends to cause the deformations due to the meridian inflection to be concentrated in the area of the sidewall lying between the maximum chord and the edge of the belt package.

The configuration adopted for the meridian profile meets the conditions of the enclosing rectangle in the inflated state and enables the casing profile to be joined to the bead filler while avoiding points of discontinuity in the sidewall portion of said profile.

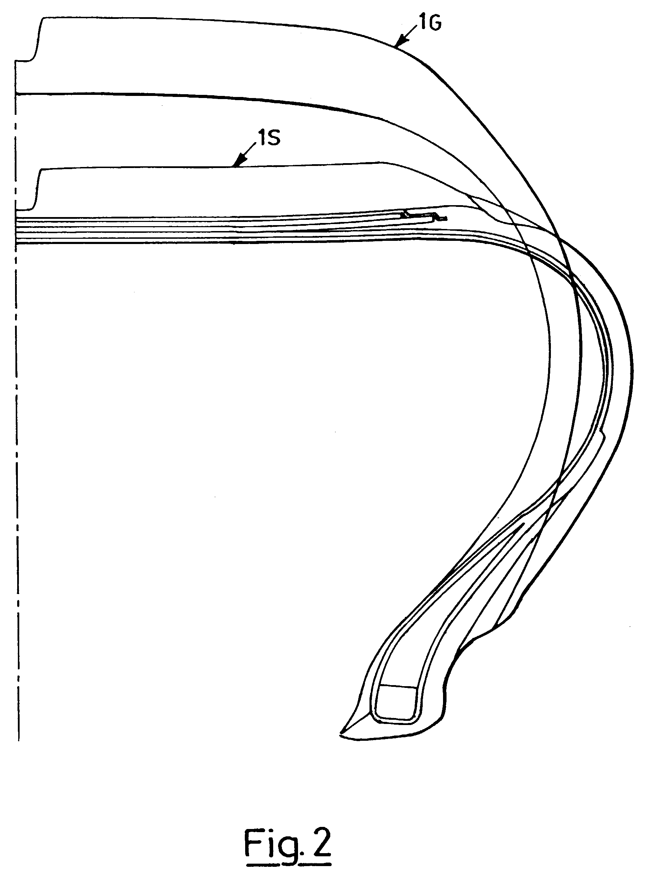

Fig. 2 shows the tyre 1 in the inflated configuration 1G, with an operating pressure p = 2.2 bar, and in the flattened configuration 1S, under a load Q = 493 kg.

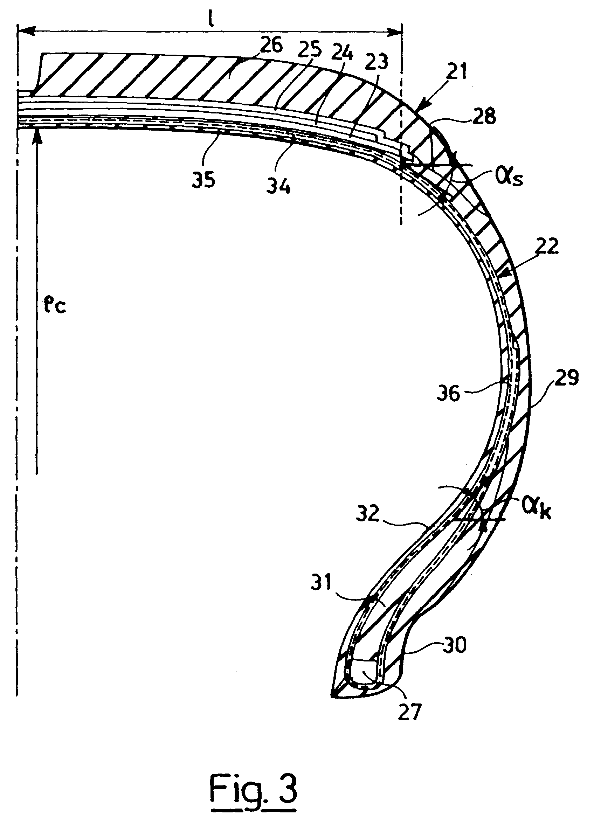

Fig. 3 shows a conventional tyre 21, having the classification 195/65 R 15 and identified by the symbol NP6.

The tyre 21 comprises a casing 22 formed by a ply folded around bead cores 27, belt strips 23, 24 and 25, and a tread strip 26. A shoulder 28, a sidewall 29, a bead 30 and a bead filler 31 of the tyre 21 are shown. An air-tight inner layer 32 is also shown.

The casing ply 2 of the tyre 21 has a meridian profile (plyline) 34 comprising a central crown portion (underbelt) 35 and two sidewall portions 36, one on the right and one on the left.

The tyre 21 has a radius of curvature $\rho_c$ = 357.1 mm; angle $\alpha_s$ = 31.4°; angle $\alpha_k$ = 42.2°; and width l = 75.8 mm.

When Fig. 1 is compared with Fig. 3, it is clear that the belt package 3, 4 and 5 and the tread strip 6 of the tyre 1 have a flatter shape than the belt package 23, 24 and 25 and the tread strip 26 of the tyre 21 so that their deformation in the meridian plane is smaller when they pass through the footprint.

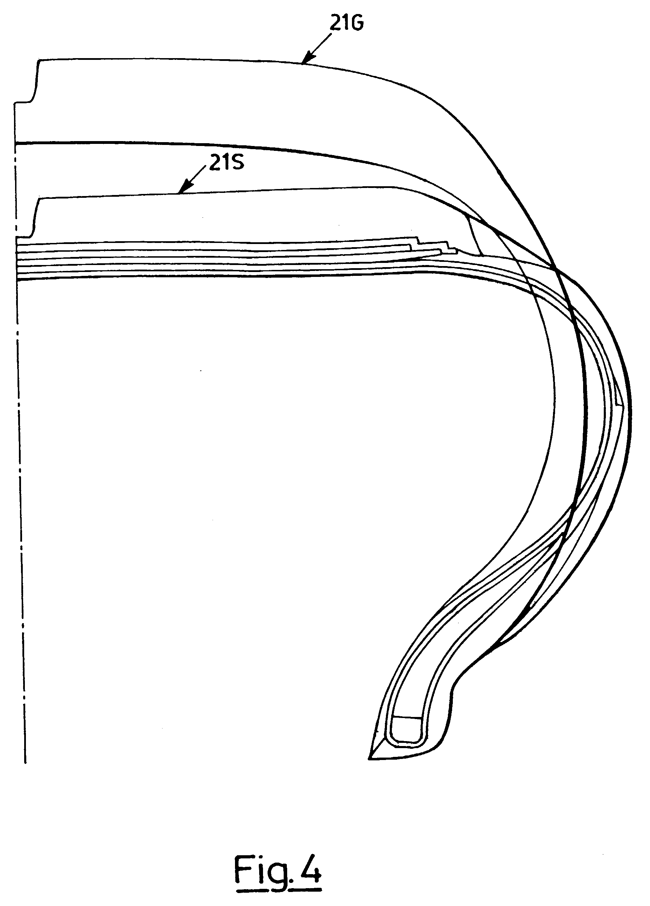

Fig. 4 shows the tyre 21 in the inflated configuration 21G, with an operating pressure p = 2.2 bar, and in the flattened configuration 21S, under a load Q = 493 kg.

When Fig. 4 is compared with Fig. 2 it may be noted that the upper mid-point of the sidewall 9 of the tyre 1 (near the tread strip 6) is more markedly deformed in the flattened state than the lower mid-point of the sidewall (near the bead 10), while the upper and lower areas of the sidewall 29 of the tyre 21 are deformed in a more uniform way in the flattened state.

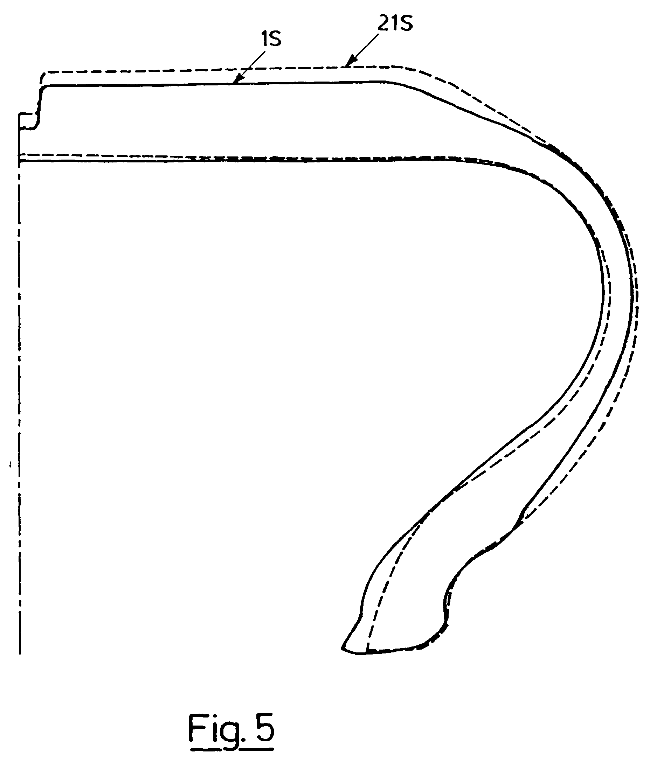

In Fig. 5, the flattened configuration 1S of the tyre 1 according to the invention and the flattened configurations 21S of the conventional tyre 21, found with the same load of 493 kg, are compared.

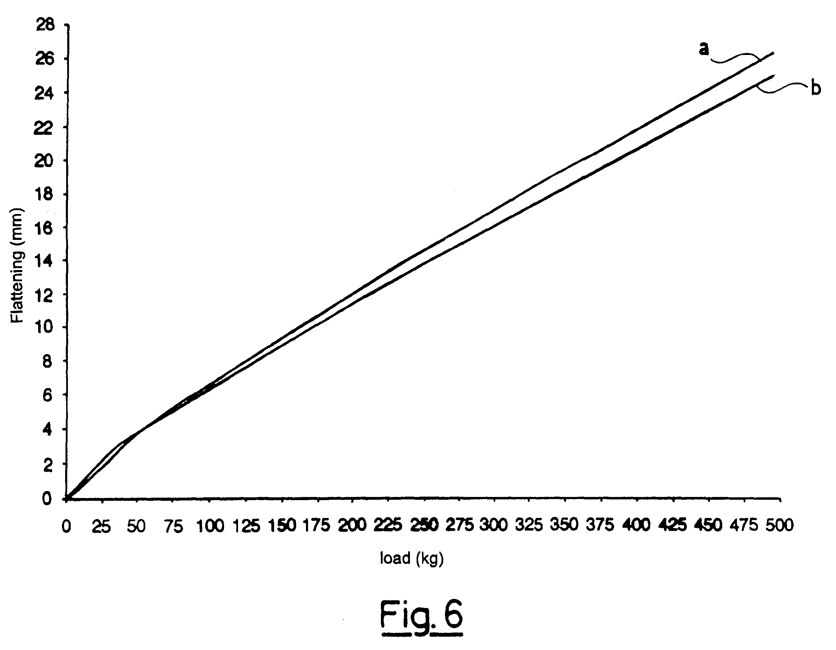

The graph in Fig. 6 shows the variation in the flattening with a variation in the load for the tyre 1 (line a) and for the tyre 21 (line b). The tyre 1 is found to undergo a greater flattening than the tyre 21 for the same load. This is due to the fact that the upper area of the sidewall is more deformable than that of the tyre 21.

Two tyres having mixtures with the following characteristics were used to evaluate the rolling resistance of the tyre 1 with respect to the tyre 21:

| Material | Elastic modulus E' $(N/mm^2)$ | tan $\delta$ (Loss factor) |
|---|---|---|
| Tread | 6.975 | 0.1486 |
| Sidewall | 3.768 | 0.0856 |
| Abrasion-resistant material | 9.7 | 0.217 |
| Bead filler | 57.35 | 0.204 |
| Liner | 3.318 | 0.269 |
| Casing | 3.925 | 0.09596 |
| Belts | 9.234 | 0.108 |
| Zero-degree belts | 6.42 | 0.1025 |

Tests were carried out with a vertical load of 493 kg, a speed of 100 km/hr and a mixture temperature of 70°C.

The following values were found for the tyre 1:

| Tyre 1 | Area | Power dissipated | Proportion of total | Ratio |
|---|---|---|---|---|
| R.R. = 5.93926 | Tread | 409818.28 | 51.4 | 4.3 |
| (thou.) | Sidewall | 94287.94 | 11.8 | |

R.R. indicates the coefficient of rolling resistance, expressed in thousandths of the value of the ratio between the vertical load applied to the tyre and the tractive force required to move the tyre. The power dissipated is expressed in N*mm/s. The "Ratio" column shows the ratio between the power dissipated in the tread mixture and the power dissipated in the sidewall mixture.

The following values were found for the comparative tyre 21:

| Tyre 21 | Area | Power dissipated | Proportion of total | Ratio |
|---|---|---|---|---|
| R.R. = 6.24967 | Tread | 425859.08 | 50.7 | 7.0 |
| (thou.) | Sidewall | 61035.40 | 7.3 | |

It is found that the ratio between the power dissipated in the tread mixture and the power dissipated in the sidewall mixture is smaller in the tyre 1 than in the tyre 21. The tyre 1 therefore has a power dissipation distribution which is more balanced between its parts than that of the tyre 21.

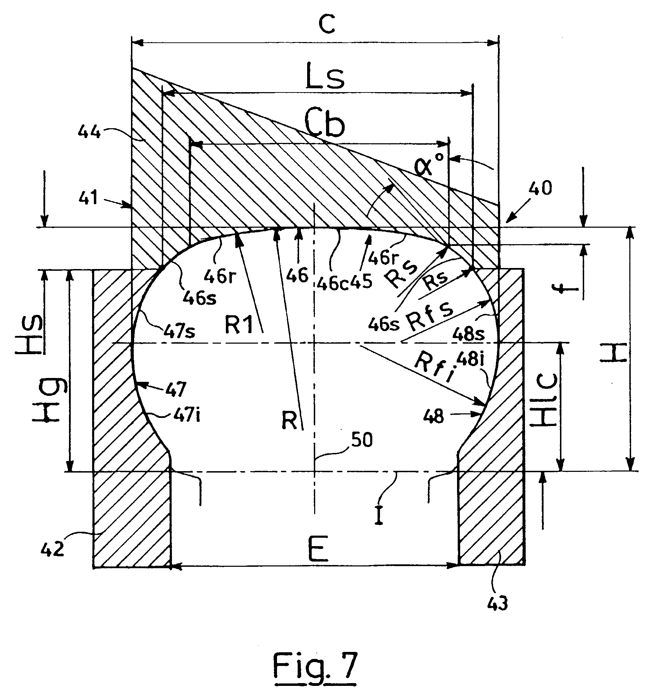

Fig. 7 shows a vulcanization mould 40 of the centripetal type, suitable for tyre production. The mould 40 comprises a central crown 41, formed by a plurality of radially movable sectors 44, for moulding the pattern of the tread strip and the shoulders of the tyre. The projections and grooves of the sectors 44 are not shown. The mould 40 also comprises two cheeks 42 and 43 which are mirror images of each other and are axially opposed, for moulding the sidewalls and beads of the tyre, and an inner bladder, not shown, which can be inflated by means of a pressurized fluid. The sectors 44 are moved radially in both directions (centripetal and centrifugal), perpendicularly to the longitudinal axis of the mould, by an operating ring which is not shown. The cheeks 42 and 43 are movable axially and reciprocally with respect to each other.

In the plane of the meridian section, the mould 40 has an inner profile 45, formed centrally by a base profile 46 of a sector and laterally by two profiles 47 and 48 of the cheeks. The base profile 46 has a central portion 46c flanked by two connecting portions 46r which in turn are flanked by two shoulder portions 46s. Each of the cheek profiles 47 and 48 is formed by two portions, 47s, 47i and 48s, 48i respectively.

Fig. 7 shows the following dimensional parameters of the mould 40: C = chord of tyre; $L_s$ = width of sectors; $C_b$ = chord of tread; R = radius of tread on crown; $R_1$ = radius of crown-shoulder joint; $R_s$ = radius of shoulder; $\alpha°$ = angle of shoulder with respect to a longitudinal axis 50; $R_{fs}$ = radius of upper sidewall; $R_{fi}$ = radius of lower sidewall; f = camber of tread; $H_s$ = height of sectors; H = height of section; $H_g$ = height of cheeks; $H_{lc}$ = height of maximum chord point; E = width of mould rim.

In the mould 40, the angle $\alpha°$ lies in a range from 42° to 43°, and the radius of meridian curvature R lies in a range from 500 mm to 619 mm. In turn, the radii of curvature $R_{fs}$ and $R_{fi}$ of the portions 47s, 47i and 48s, 48i of the cheek profiles have a ratio $R_{fs}/R_{fi}$ equal to approximately 0.5 and the centres of the radii of curvature $R_{fs}$ and $R_{fi}$ are located at a height $H_{lc}$ which is equal to approximately 2/3 of the height of the cheek $H_g$.

In particular, the mould 40 for producing the tyre 1 has the following dimensions:

C = 209.4 mm; $L_s$ = 183.0 mm; $C_b$ = 142.6 mm; R = 619.0 mm; $R_1$ = 129.0 mm; $R_s$ = 30.0 mm; $\alpha°$ = 42.6°; $R_{fs}$ = 47.4 mm; $R_{fi}$ = 105.0 mm; f = 7.5 mm; $H_s$ = 29.5 mm; H = 127.75 mm; $H_g$ = 98.25 mm; $H_{lc}$ = 65.46 mm; E = 174.0 mm.

**Claims**

1.   Tyre (1) for a motor vehicle, made from a predetermined viscoelastic material, and comprising

     a)at least one casing ply (2),

b) a tread strip (6) placed on the crown of said casing ply (2),

c) at least one belt strip (3; 4; 5) interposed coaxially between said casing ply (2) and said tread strip (6),

d) right-hand and left-hand sidewalls (9), and

e) right-hand and left-hand beads (10),

f) said casing ply (2) having a profile (14), in the plane of a meridian section, which has a central crown portion (15) and two sidewall portions (16), one on the right and one on the left,

g) each of said sidewall profile portions (16) being delimited by two points S and K, where the point S is located substantially at one edge of said at least one belt strip (3; 4; 5) and the point K separates a sidewall (9) from a bead (10),

h) said tyre (1) assuming, at the operating pressure and in the absence of a load, an inflated configuration having a predetermined outer profile which matches a predetermined enclosing rectangle,

i) said outer profile having a predetermined maximum chord $\overline{C}$ and a predetermined maximum height $\overline{H}$, the ratio $\overline{H}/\overline{C}$ lying in a range from 0.6 to 0.8,

characterized in that,

j) in said inflated configuration, said crown profile portion (15) has a radius of meridian curvature $\rho_c$ lying in a range from 406 mm to 690 mm and each of said sidewall profile portions (16) forms an angle $\alpha_s$ with the axis of rotation of the tyre, at said point S, which lies in a range from 25° to 30°.

2. Tyre according to Claim 1, characterized in that each of said sidewall profile portions (16) forms an angle $\alpha_k$ with the axis of rotation of the tyre, at said point K, which is $\geq 45°$.

3. Tyre according to Claim 1, characterized in that said crown profile portion (15) is substantially flat.

4. Mould (40) for producing a tyre made from a predetermined viscoelastic material, said mould having

A) a crown (41) formed by radially movable sectors (44) for moulding a tread strip and shoulders of said tyre, and

B) cheeks (42, 43) for moulding sidewalls and beads of said tyre,

C) said mould having a profile (45), in the plane of the meridian section, which has a predetermined maximum chord C, a predetermined maximum height H and a fitting line I, and is formed centrally by a base profile of one sector (46) and laterally by profiles of said cheeks (47, 48),

D) said base profile of the sector (46) having a central portion (46c) flanked by two connecting portions (46r), which in turn are flanked by two lateral portions (46s),

E) each cheek profile (47; 48) having a total height $H_g$ and having a first portion (47s; 48s) with a first radius of curvature $R_{fs}$ and a second portion (47i; 48i) with a second radius of curvature $R_{fi}$, characterized in that

F) the ratio between said first and second radius of curvature $R_{fs}/R_{fi}$ ranges from 0.45 to 0.56.

5. Mould (40) according to Claim 4, characterized in that the ratio between said first and second radius of curvature $R_{fs}/R_{fi}$ is approximately 0.5.

6. Mould (40) according to Claim 4, characterized in that the centres of said first and second radius of curvature $R_{fs}$ and $R_{fi}$ lie on said maximum chord C and in that said maximum chord C is located at a distance $H_{lc}$ from said fitting line I equal to approximately 2/3 of said height of the cheek profile $H_g$.

7. Mould (40) according to Claim 4, characterized in that said central portion (46c) of said base profile of the sector (46) is approximately flat and has a radius of meridian curvature $R \geq 500$ mm, and each of said connecting portions (46r) has, at the point of junction with one of said lateral portions (46s), an angle $\alpha_0$ with respect to the longitudinal axis (50) of the mould which is $\geq 42°$.

8. Mould (40) according to Claim 4, characterized in that said base profile of the sector (46), comprising said central portion (46c) and said flanking connecting portions (46r), has a camber f of $\leq 7.5$ mm.

9. Mould (40) for producing a tyre from a predetermined viscoelastic material, said mould having

i. a crown (41) formed by radially movable sectors (44) for moulding a tread strip and shoulders of said tyre, and

ii. cheeks (42, 43) for moulding sidewalls and beads of said tyre,

iii. said mould having a profile (45), in the plane of the meridian section, which has a predetermined maximum chord C, a predetermined maximum height H and a fitting line I, and is formed centrally by a base profile of one sector (46) and laterally by profiles of said cheeks (47, 48),

iv. said base profile of the sector (46) having a central portion (46c) flanked by two connecting portions (46r), which in turn are flanked by two lateral portions (46s),

characterized in that

v. said central portion (46c) of said base profile of the sector (46) is substantially flat and has a radius of meridian curvature R $\geq$ 500 mm, and

vi. each of said connecting portions (46r) has, at the point of junction with one of said lateral portions (46s), an angle $\alpha_0$ with respect to the longitudinal axis (50) of the mould which is $\geq 42°$.

10. Mould (40) according to Claim 9, characterized in that said base profile of the sector (46), comprising said central portion (46c) and said flanking connecting portions (46r), has a camber f $\leq$ 7.5 mm.

## Fig.1

1G

1S

## Fig.2

Fig. 3

## Fig.4

1S    21S

Fig. 5

Fig.6

Fig. 7

European Patent Office

**EUROPEAN SEARCH REPORT**

Application Number

EP 00 20 1757

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 533 085 A (MICHELIN RECH TECH) 24 March 1993 (1993-03-24) * page 3, line 24 – line 30 * * page 5, line 9 – line 34 * * page 6, line 6 – line 14 * * figure 3 * | 1-3 | B60C3/04 |
| X | US 5 027 876 A (CHROBAK DENNIS S ET AL) 2 July 1991 (1991-07-02) | 4,5 | |
| Y | * column 4, line 33 – line 63 * * figure 3 * | 7,8 | |
| X | EP 0 739 759 A (BRIDGESTONE CORP) 30 October 1996 (1996-10-30) | 9,10 | |
| Y | * page 6, line 48 – line 58 * * table 1 * * claim 1 * * figure 1 * | 7,8 | |
| A | US 4 282 918 A (TAKAHASHI KEN ET AL) 11 August 1981 (1981-08-11) * column 4, line 28 – column 5, line 35 * * table 1 * * figure 1 * | 1-3 | TECHNICAL FIELDS SEARCHED (Int.Cl.7) B60C |
| A | PATENT ABSTRACTS OF JAPAN vol. 1996, no. 10, 31 October 1996 (1996-10-31) & JP 08 142602 A (SUMITOMO RUBBER IND LTD), 4 June 1996 (1996-06-04) * abstract * * figures 1,3,4 * | 1-3 | |

-/--

The present search report has been drawn up for all claims

| Place of search | Date of completion of the search | Examiner |
|---|---|---|
| THE HAGUE | 15 August 2000 | Bibollet-Ruche, D |

**European Patent Office**

# EUROPEAN SEARCH REPORT

Application Number

EP 00 20 1757

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|----------|-------------------------------------------------------------------------------|-------------------|----------------------------------------------|
| A | PATENT ABSTRACTS OF JAPAN vol. 010, no. 326 (M-532), 6 November 1986 (1986-11-06) & JP 61 132401 A (YOKOHAMA RUBBER CO LTD:THE), 19 June 1986 (1986-06-19) * abstract * | 4 | |
| A | PATENT ABSTRACTS OF JAPAN vol. 009, no. 313 (M-437), 10 December 1985 (1985-12-10) & JP 60 148702 A (BRIDGESTONE KK), 6 August 1985 (1985-08-06) * abstract * | 8-10 | |
| | | | TECHNICAL FIELDS SEARCHED (Int.Cl.7) |

The present search report has been drawn up for all claims

| Place of search | Date of completion of the search | Examiner |
|-----------------|----------------------------------|----------|
| THE HAGUE | 15 August 2000 | Bibollet-Ruche, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent**
Office

**Application Number**

EP 00 20 1757

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**LACK OF UNITY OF INVENTION SHEET B** Application Number

EP 00 20 1757

The Search Division considers that the present European patent application does not comply with the requirements of unity of invention and relates to several inventions or groups of inventions, namely:

1. Claims: 1-3

   Pneumatic tyre having a determined combination of dimensional features related to the carcass structure.

2. Claims: 4-8

   Tyre mould having a determined combination of dimensional features related to the sidewalls.

3. Claims: 9,10

   Tyre mould having a determined combination of dimensional features related to the tread.

EP 1 057 658 A1

## ANNEX TO THE EUROPEAN SEARCH REPORT
## ON EUROPEAN PATENT APPLICATION NO.

EP 00 20 1757

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2000

| Patent document cited in search report | | Publication date | Patent family member(s) | | Publication date |
|---|---|---|---|---|---|
| EP 0533085 | A | 24-03-1993 | CA 2078623 A | | 20-03-1993 |
| | | | US 5637162 A | | 10-06-1997 |
| US 5027876 | A | 02-07-1991 | NONE | | |
| EP 0739759 | A | 30-10-1996 | DE 69608926 D | | 27-07-2000 |
| | | | JP 9071107 A | | 18-03-1997 |
| | | | US 5803998 A | | 08-09-1998 |
| US 4282918 | A | 11-08-1981 | JP 55008903 A | | 22-01-1980 |
| | | | JP 57029283 B | | 22-06-1982 |
| | | | AU 521487 B | | 01-04-1982 |
| | | | AU 4826979 A | | 03-01-1980 |
| | | | CA 1104476 A | | 07-07-1981 |
| | | | DE 2926159 A | | 10-01-1980 |
| | | | FR 2429681 A | | 25-01-1980 |
| | | | GB 2026956 A,B | | 13-02-1980 |
| | | | IT 1119783 B | | 10-03-1986 |
| JP 08142602 | A | 04-06-1996 | NONE | | |
| JP 61132401 | A | 19-06-1986 | NONE | | |
| JP 60148702 | A | 06-08-1985 | NONE | | |

EPO FORM P0459

For more details about this annex : see Official Journal of the European Patent Office, No. 12/82

20